# EUROPEAN PATENT APPLICATION

(11) **EP 1 840 431 A1**
(43) Date of publication of application: **03.10.2007**
(21) Application number: 07105167.6
(22) Date of filing: 29.03.2007
(51) Int. Cl.: F16K 24/06

(54) **Aeration valve for electrical appliances using steam**

(30) Priority: 30.03.2006 IT UD20060082
(71) Applicant: DE' LONGHI S.p.A., 31100 Treviso (IT)
(72) Inventor: Lorenzon, Antonio, 31043 Fontanelle (TV) (IT); Masier, Galdino, 31025 Santa Lucia di Piave (TV) (IT)
(74) Representative: Petraz, Gilberto Luigi

(57) **Abstract**

Aeration valve (10) for steam electrical appliances, comprising at least a main body (11, 11a, 11b) provided with a through pipe (12), and a cut-off element (16) that slides freely inside the through pipe (12) due to the effect of the differences in pressure between a first aperture (13) and a second aperture (15) of the through pipe (12). The aeration valve (10) comprises a shoulder surface (17) made inside the through pipe (12) and shaped so as to prevent the cut-off element (16) from exiting from the through pipe (12) through the first aperture (13) and, at the same time, so as to allow a fluid to pass out of the first aperture (13). The aeration valve (10) also comprises a seal element (20) provided inside the through pipe (12) on the side opposite the shoulder surface (17) with respect to the cut-off element (16) in order to prevent both the cut-off element (16) and the fluid from exiting through the second aperture (15).

## Description

### FIELD OF THE INVENTION

The present invention concerns an aeration valve usable in a fluid-dynamic plant for delivering steam, for example of the type installed in a steam generation unit of a steam electrical appliance. In particular, the aeration valve according to the present invention is applicable to return the pressure inside a boiler of the steam generation unit to atmospheric values. The aeration valve according to the present invention is advantageously applied also to an electrovalve associated with a steam generation unit.

### BACKGROUND OF THE INVENTION

Aeration valves are known, installed in the boiler units of steam electrical appliances, such as for example irons, steam cleaners or others.

Known aeration valves are usually installed in the electrical appliance so that they maintain, inside the boiler provided, a pressure substantially equal to atmospheric pressure, especially during the cooling steps of the steam generator.

A first type of known valve is associated with the boiler and comprises a pipe that communicates, on one side, with the inside of the boiler, and on the other side, is open towards the outside. Inside the pipe a piston and a helical spring are axially disposed, the latter normally keeping the piston thrust in a position that blocks the pipe.

In this way, when a depression is created inside the boiler such as to overcome the thrust of the spring, the piston opens the pipe and allows air to pass inside the boiler, and thus allows to re-establish, on each occasion, the desired conditions of atmospheric pressure in the boiler.

A second type of known valve is associated with the segment of fluid-dynamic circuit through which the water is introduced into the boiler.

In this case, the known valve comprises a first through pipe which allows to connect a water tank and relative pump with the boiler, and a second pipe, open towards the outside and intersecting the first, through which air is made to enter inside the boiler, due to depression.

To prevent the depression, which draws air from the outside through the second pipe, from causing a reflux of water through the first pipe, this second type of known valves comprises a closing piston, disposed sliding axially inside the second pipe and regulated by a complex elastomer and packing system.

Both known solutions, however, are very expensive, particularly due to their constructive complexity.

Moreover, the operative application of known aeration valves is limited to their specific form of construction and their functioning principle, and they are difficult to integrate with known components already present in the circuit, such as for example an electrovalve for delivering steam, a pressure switch unit, or others.

Other aeration valves are known from the documents GB-A-04191, FR-A-955.798, DE-U-92 16 290 and DE-U-94 07 800, but they too have the same disadvantages as those described above.

Purpose of the present invention is therefore to achieve an aeration valve which is simple and economical to make and which can be associated with any component of the steam generation unit, keeping its characteristics of effectiveness and functionality unvaried.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purpose, an aeration valve according to the present invention is advantageously associated with a steam generation unit of a steam electrical appliance, and in particular, but not necessarily, with an electrovalve associated with a boiler of said electrical appliance. The aeration valve according to the present invention comprises a main body provided with a through pipe, in which a cut-off element is housed, which can slide freely inside the through pipe due to the effect of the differences in pressure that affect it, between a first aperture and a second aperture of the through pipe.

According to a characteristic feature of the present invention, the aeration valve also comprises:
- a shoulder surface made in a narrower section of the through pipe so as to prevent the cut-off element from coming out of the through hole through said first aperture and, at the same time, so as to allow a fluid, for example air, to flow out through said first aperture; and
- sealing means provided inside the through pipe on the opposite side of said shoulder surface with respect to the cut-off element, to prevent the cut-off element, and also the fluid, from coming out of said second aperture.

The aeration valve according to the present invention does not therefore need any elastic member, such as springs, elastomers or others, to define the different operating conditions, but simply allows, thanks to the conformation of its shoulder surface and the sealing means, to exploit the differences in pressure between the two apertures of the pipe so as to coordinate the passage or the fluid-dynamic seal.

The valve according to the present invention is therefore simple and economical to make and does not require particular or complex working operations in order to make it.

In a preferred application of the valve according to the invention, to stabilize the working pressure inside a steam generation boiler, the first aperture is directed towards the boiler, while the second aperture faces towards the outside environment.

In this first operating condition, after the boiler inside which a depression is created has been switched off, the cut-off element is held against the shoulder surface which, due its conformation, prevents the cut-off element from exiting from the through pipe but allows in any case the outside air to enter into the boiler, and thus normalize the pressure inside it.

Vice versa, when the steam produced in the boiler is delivered, part of the steam penetrates under pressure into the through pipe through the first aperture, causing the axial movement of the cut-off element towards the second aperture, until it contacts the sealing means.

In this second operating condition, accidental leakages of the steam through the aeration valve is prevented, guaranteeing the hermetic seal of the steam generation unit.

In a preferential form of embodiment, the cut-off element substantially consists of a metal ball with a diameter substantially equal to, or slightly less than, that of the through pipe.

According to a variant, the through pipe comprises a second shoulder surface, or safety surface, made in proximity with the second aperture so that, if the sealing means were accidentally to suffer a breakage or a malfunction, the metal ball is held inside the through pipe by said second shoulder wall.

According to another characteristic feature of the present invention, the main body of the aeration valve is made in two parts able to be selectively coupled with each other. In particular, when the aeration valve is coupled with an electrovalve, in turn associated with the boiler of a steam electrical appliance, a first of said two parts is made in a single piece with the body of the electrovalve. In this way, the possible operations to maintain and clean the aeration valve are greatly facilitated.

According to another characteristic feature of the present invention, the aeration valve also comprises a lateral pipe located in communication with said through pipe and able to be associated with a pipe for feeding water. Advantageously, the lateral pipe is made in a single piece with the main body of the aeration valve.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows an aeration valve according to the present invention sectioned along a plane substantially longitudinal to its development;
- fig. 2 shows the aeration valve in fig. 1 sectioned along a plane substantially orthogonal to the first;
- fig. 3 shows the aeration valve in fig. 1 in an operating application;
- fig. 4 shows a first variant of the aeration valve in fig. 1;
- fig. 5 shows a second variant of the aeration valve in fig. 1;
- fig. 6 is a view from above of a third variant of the aeration valve in fig. 1;
- fig. 7 is a lateral view of the aeration valve in fig. 6;
- fig. 8 is a section from VIII to VIII of fig. 6.

### DETAILED DESCRIPTION OF SOME PREFERENTIAL

### FORMS OF EMBODIMENT

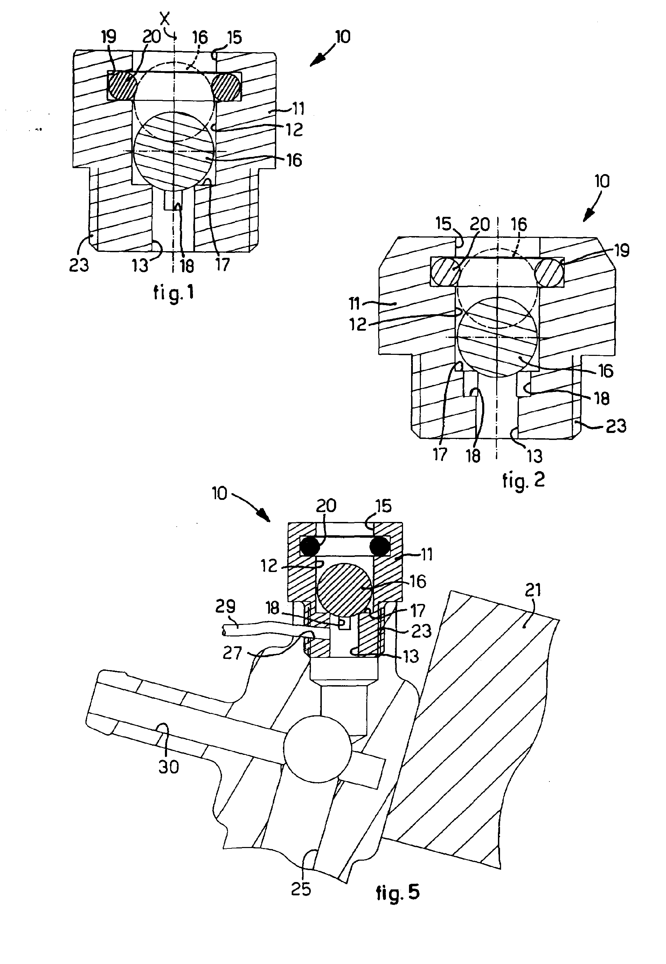

With reference to figs. 1, 2 and 3, an aeration valve 10 according to the present invention comprises a main body 11, in this case consisting of a single piece, inside which a through pipe 12 is made, with a central axis X. The through pipe 12 is open on one side through a first aperture 13, shown below in figs. 1, 2 and 3, and on the other side, through a second aperture 15, shown above.

Inside the through pipe 12 a cut-off element, consisting of a metal ball 16, is disposed with a slight play; according to the differences in pressure between the two apertures 13 and 15, the metal ball 16 is able to move axially and autonomously inside the through pipe 12, along the central axis X.

The through pipe 12 comprises a shoulder surface 17 made in proximity with the first aperture 13, and which determines a narrowing in the section of the through pipe 12, such as to prevent the metal ball 16 from coming out of the first aperture 13.

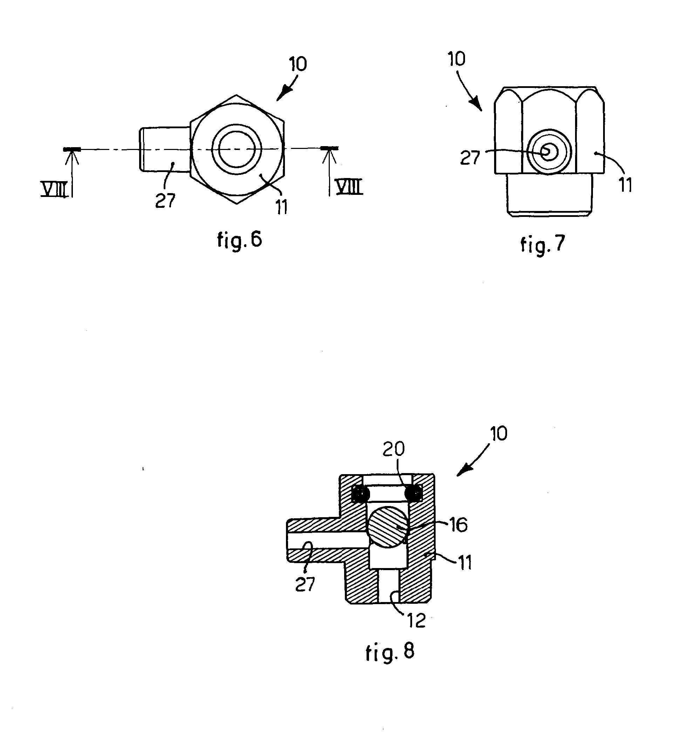

Moreover, on the through pipe 12, in correspondence with the shoulder surface 17, two hollows 18 are made, disposed in this case on diametrically opposite sides with respect to the central axis X. In the condition shown in figs. 1 to 7, that is, with the metal ball 16 resting on the shoulder surface 17, the two hollows 18 allow the air to pass through the through pipe 12.

Moreover, the through pipe 12 comprises an annular seating 19 made in proximity with the second aperture 15, and able to house inside it a sealing O-ring 20. When the metal ball 16 is in the raised position, shown by the line of dashes in figs. 1 and 2, the O-ring 20 prevents the metal ball 15 from coming out of the second aperture 15 and, at the same time, guarantees a hermetic seal against the passage of air or other fluid through the second aperture 15.

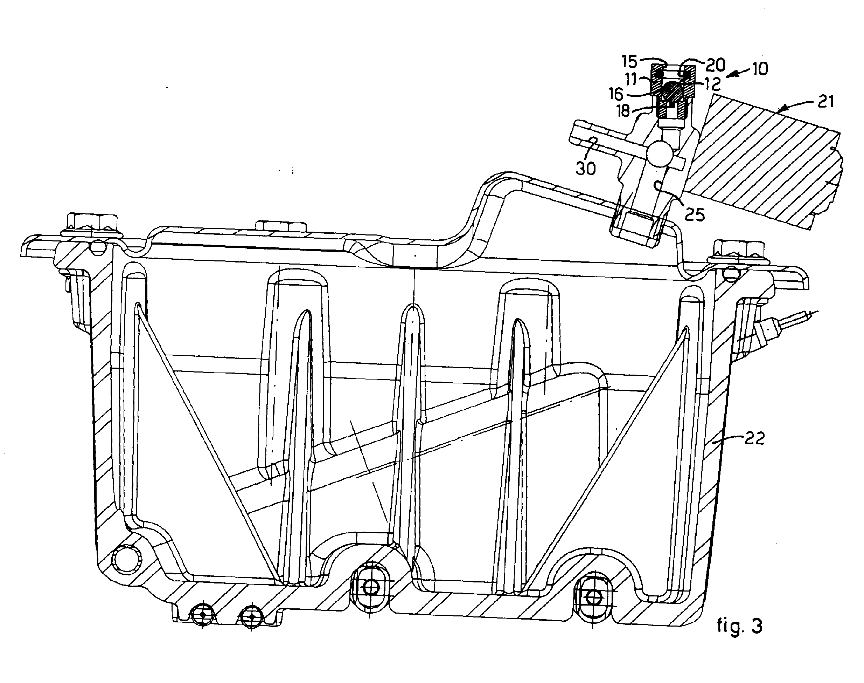

As shown in fig. 3, the aeration valve 10 is applied particularly in a steam generation unit, of a known type and only partly shown here, for example used to produce steam in a steam electrical appliance.

In this case (figs. 1, 2 and 3), the aeration valve 10 is mounted on an electrovalve 21 to deliver steam, associated with a steam generation boiler 22, and comprises externally, in correspondence with the first aperture 13, a threading 23, which allows it to be mounted on a corresponding threading made on an upper part of the electrovalve 21, so as to take the through pipe 12 into reciprocal alignment with a relative steam delivery pipe 25, present in the electrovalve 21, and communicating with the inside of the boiler 22.

There is also a steam outlet pipe 30 in the electrovalve 21, associated with the steam delivery pipe 25.

In this way, when the boiler 22 cools down after it has been switched off, a depression is generated inside the boiler 22 which holds the metal ball 16 adjacent to the shoulder surface 17, thus causing air to be sucked in from outside through the hollows 18, until the pressure inside the boiler 22 returns substantially equal to atmospheric pressure.

The through pipe 12 is permanently connected to the boiler 22 by means of the body of the electrovalve 21.

When the boiler 22 is operative, the pressurized steam produced thereby enters inside the delivery pipe 25 and thrusts the metal ball 16, along the axis X of the through pipe 12, towards the second aperture 15 until it takes it into contact with the O-ring 20. In this way the second aperture 15 is closed, and therefore the outside air cannot enter into the boiler 22 through the aeration valve 10.

In this condition the fluid-dynamic seal of the aeration valve 10 is thus guaranteed, allowing the steam to exit only through the outlet pipe 30.

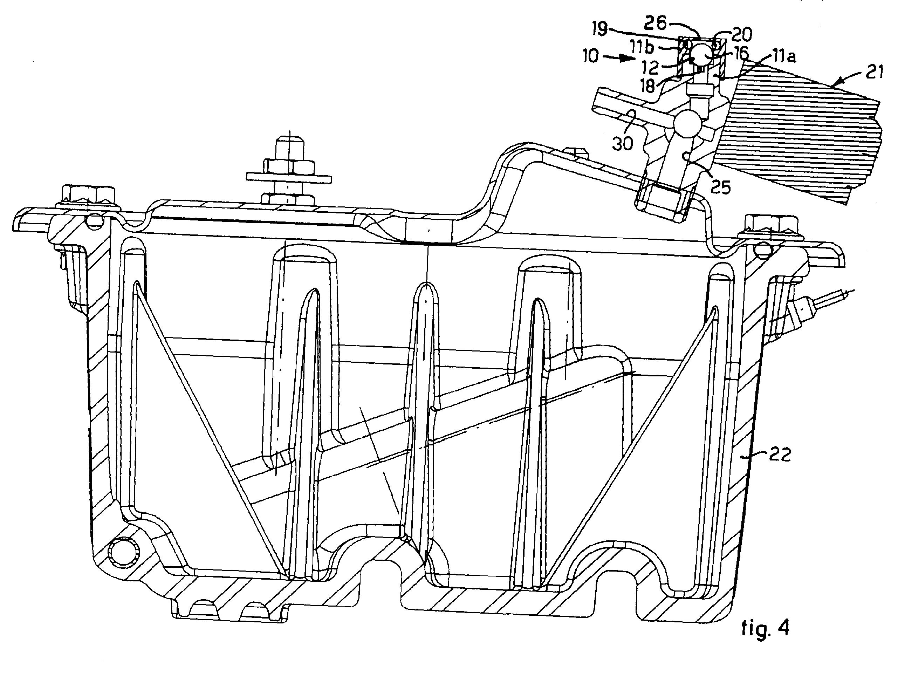

According to a first variant shown in fig. 4, the valve 10, unlike in the solution shown in figs. 1 to 3 and described above, consists substantially of two parts 11a and 11b able to be selectively associated with each other by screwing.

In this case, a first part 11a is made in a single piece with the body of the electrovalve 21, and comprises both the first aperture 13, the shoulder surface 17, and also the hollows 18.

A second part 11b, which constitutes a sort of closing element of the first part 11a, comprises instead the annular seating 19 with the relative O-ring 20 and a safety surface 26, made in correspondence with the second aperture 15 and able to define a reduction in the diameter of the through pipe 12. The safety surface 26 causes the metal ball 16 to remain inside the pipe 12, preventing it from coming out from the second aperture 15, if the O-ring 20 were to be broken, damaged or in any case ineffective.

This first variant, with the aeration valve 10 made in two parts, 11a and 11b, one of which made in a single piece with the electrovalve 21, allows to carry out more simply the possible operations to maintain and clean the aeration valve 10.

According to a second variant, shown in fig. 5, the aeration valve 10 also functions as a pipe to introduce the water inside the boiler 22.

In this second variant, a lateral channel 27 is in fact provided, which on one side is in communication with the through pipe 12 and on the other side is associated with a pipe 29 connecting it with the possible water tank, of a known type and not shown in the drawings.

According to a third variant, shown in figs. 6, 7 and 8, the main body 11 of the aeration valve 10 is shaped so as to comprise the lateral channel 27 made directly in communication with the through pipe 12.

It is clear, however, that modifications and/or additions of parts may be made to the aeration valve 10 as described heretofore, without departing from the scope of the present invention.

For example, it comes within the scope of the present invention to provide that instead of the metal ball 16 any other type of cut-off element can be provided, such as for example a little cylinder or plate, or other, disposed sliding inside the through pipe 12.

It also comes within the scope of the present invention to provide that said cut-off element is made of plastic material, cork, glass or other material suitable to achieve a seal against the passage of air.

It is also clear that, although the present invention has been described with reference to specific examples, a person of skill in the art shall be able to achieve many other equivalent forms of aeration valve, having the characteristics as set forth in the claims and hence all coming within the scope of protection defined thereby.

## Claims

1. Aeration valve for steam electrical appliances, comprising at least a main body (11, 11a, 11b) provided with a through pipe (12), in which a cut-off element (16) is accommodated, able to slide freely inside said through pipe (12) due to the effect of the differences in pressure which affect said cut-off element (16), between a first aperture (13) and a second aperture (15) of said through pipe (12), **characterized in that** said aeration valve further comprises:
- a shoulder surface (17) made in a narrower section of said through pipe (12) and shaped so as to prevent said cut-off element (16) from exiting from said through pipe (12) through said first aperture (13) and, at the same time, so as to allow a fluid to pass out of said first aperture (13); and
- sealing means (20) provided inside said through pipe (12) on the side opposite said shoulder surface (17) with respect to said cut-off element (22) and able to prevent both said cut-off element (12) and also said fluid from exiting through said second aperture (15).

2. Aeration valve as in claim 1, **characterized in that** said shoulder surface (17) comprises at least a hollow (18) sized so as to allow only said fluid to pass out of said first aperture (13) and to prevent said cut-off element (12) from exiting through said first aperture (13).

3. Aeration valve as in claim 1 or 2, **characterized in that** said sealing means (20) is disposed inside a mating annular seating (19) made inside said through pipe (12) in correspondence with said second aperture (15).

4. Aeration valve as in any claim hereinbefore, **characterized in that** said cut-off element is a metal ball (16).

5. Aeration valve as in any claim hereinbefore, **characterized in that** it further comprises a second shoulder surface (26) or safety surface, made between said sealing means (20) and said second aperture (15) and able to prevent said cut-off element (16) from coming out of said second aperture (15), in the event said sealing means (20) does not intervene.

6. Aeration valve as in any claim hereinbefore, able to be selectively coupled with an electrovalve (21) associated with a boiler of said steam electrical appliance, **characterized in that** said main body is made in two parts (11a, 11b) able to be selectively coupled together and **in that** a first part (11a) of said two parts (11a, 11b) is made in a single piece with the body of said electrovalve (21).

7. Aeration valve as in any claim hereinbefore, **characterized in that** it further comprises a lateral pipe (27) in communication with said through pipe (12) and able to be associated with a pipe (29) for feeding the water.

8. Aeration valve as in claim 7, **characterized in that** said lateral pipe (27) is made in a single piece with said main body (11).
